(19) Europäisches Patentamt
European Patent Office
Office européen des brevets

(11) **EP 3 050 419 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
*A01C 7/04* (2006.01)   *A01C 7/20* (2006.01)

(21) Anmeldenummer: **16152690.0**

(22) Anmeldetag: **26.01.2016**

(54) **DOSIERVORRICHTUNG EINER LANDWIRTSCHAFTLICHEN MASCHINE**

DOSING DEVICE OF AN AGRICULTURAL MACHINE

DISPOSITIF DE DOSAGE D'UNE MACHINE AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2015 DE 102015101253**

(43) Veröffentlichungstag der Anmeldung:
**03.08.2016 Patentblatt 2016/31**

(60) Teilanmeldung:
**18158370.9**

(73) Patentinhaber: **Horsch Maschinen GmbH**
**92421 Schwandorf (DE)**

(72) Erfinder: **PIRKENSEER, Manfred**
**92421 Schwandorf (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
| | |
|---|---|
| **EP-A1- 0 199 926** | **EP-A1- 1 031 266** |
| **WO-A1-2010/059101** | **WO-A2-2012/129442** |
| **DE-A1-102006 031 272** | **DE-A1-102007 062 967** |
| **DE-A1-102009 043 881** | **US-A1- 2014 182 495** |

**Beschreibung**

Die vorliegende Erfindung betrifft eine Dosiervorrichtung einer landwirtschaftlichen Maschine zur vereinzelten Abgabe von Körnern wie Saatgut, mit den Merkmalen des unabhängigen Anspruchs 1.

Derartige Dosiervorrichtungen sind aus dem Stand der Technik bereits in verschiedensten Ausführungen bekannt. So beschreibt bspw. die EP 2 168 417 A1 eine Einzelkorndosiervorrichtung, die ein Gehäuse mit einer Kornzuführung und ein im Bereich eines Kornsammelraums rotierendes Förderelement umfasst, welches durch eine dünne Förderscheibe gebildet ist und auf einer Seitenfläche eine Vielzahl von regelmäßig voneinander beabstandeten, jeweils mit einer Druckdifferenz beaufschlagbaren Öffnungen zur Kornaufnahme, -vereinzelung und Förderung in Umfangsrichtung des Förderelements zu einem Abgabebereich aufweist. Der Öffnungsquerschnitt der Öffnungen des rotierenden Förderelements bzw. der rotierenden Förderscheibe öffnet sich im Abgabebereich in radialer Richtung. Die vereinzelten Körner erfahren nach radialer Öffnung eine aktive Kornbeschleunigung, welche kurzeitig höher ist als die Fallbeschleunigung. Die Erzeugung der Druckdifferenz erfolgt mittels eines Unterdrucks, welcher auf der gegenüberliegenden Seite des Kornsammelraums anliegt. Weiter erfahren die Körner im Abgabebereich eine Richtungsänderung aus einer kreisförmigen Bewegung in eine lineare Bewegung, wobei hierfür im Abgabebereich eine Abstreifvorrichtung vorhanden ist. Zur Kornbeschleunigung ist an der Dosiervorrichtung ein separater Anschluss für einen Überdruck bzw. einen Luftstrom erforderlich.

Nachteilig an diesem System ist, dass zwei Druckversorgungen benötigt werden. Ebenso ist die Gestaltung der Förderscheibe durch die nach außen geöffneten Schlitze relativ aufwendig und kostenintensiv. Weiter weisen derartige Unterdruckdosiervorrichtungen das Problem auf, dass Fremdpartikel wie Staub und Schmutz von diesen angesaugt werden und ggf. die Öffnungen der Fördereinrichtung verstopfen. Weiter ist für einen ausreichenden Differenzdruck ein hoher Luftbedarf bzw. ein hohes Unterdruckniveau nötig. Ein weiteres Problem besteht in der Anordnung der Abstreifvorrichtung in Bezug auf die Öffnungen der Förderscheibe, da hier bereits durch geringe Abweichungen der Sollposition unregelmäßige Kornabgaben hervorgerufen werden können.

Durch die US 2014/0182495 A1 ist eine Dosiervorrichtung mit einem Gehäuse offenbart. Innerhalb des Gehäuses rotiert eine Förderscheibe, welche an ihrem Außenumfang Ausnehmungen umfasst und das Gehäuse in zwei Bereiche unterteilt. Die Körner werden von den Ausnehmungen aufgrund eines in den zwei Bereichen unterschiedlich herrschenden Druckniveaus aufgenommen. Im Bereich einer Abgabe erfolgt eine Unterbrechung der Druckdifferenz und die Körner fallen über einen Trichter in eine Saatleitung.

Eine Dosiervorrichtung, bei der zum einen der Nachteil des Schmutzansaugens beseitigt und zum anderen nur eine Luftversorgung benötigt wird, ist aus der WO 2010/ 059 101 A1 bekannt; diese Dosiervorrichtung arbeitet nach dem sog. Überdruckprinzip. Diese bekannte Dosiervorrichtung umfasst eine Kammer für Saatgut, die mit einem Überdruckniveau beaufschlagt wird. Die Kammer wird von einem Dosierorgan begrenzt, wobei im Dosierorgan Aussparungen vorhanden sind, mittels denen die Kammer mit dem Umgebungsdruck verbunden wird, wodurch eine Druckdifferenz entsteht und dadurch Körner an den Aussparungen festgehalten werden. Eine Saatgutdosierleitung, zum Transport der vereinzelten Körner zu einer Saatfurche weist ebenfalls einen Einlass in der Kammer auf. In dieser Saatgutdosierleitung entsteht mit Hilfe des Überdrucks in der Kammer ein Luftstrom, wodurch die Körner mit einer Beschleunigung durch die Saatgutdosierleitung in Richtung der Saatfurche "geschossen" werden. Die Kornabgabe vom Dosierorgan in die Saatgutdosierleitung erfolgt durch eine Rolle, welche die Druckdifferenz an jeweils einer Aussparung unterbindet. Der Einlass ist unmittelbar nach der Aussparung angeordnet, wodurch eine Punktabgabe eines Korn in die Saatgutdosierleitung erfolgt.

Diese Punktabgabe hat jedoch den Nachteil, dass die Anordnung zwischen Einlass und Kornabgabe definiert bzw. exakt eingehalten werden muss, da sonst eine störungsfreie Abgabe in die Saatgutdosierleitung nicht gewährleistet werden kann. Zudem hat eine solche Punktabgabe den Nachteil, dass jeweils nur Körner in die Saatgutdosierleitung abgeben werden. Andere Elemente wie Staub oder Schmutzpartikel werden nicht oder nur zufällig abgegeben, was wiederum den Nachteil hat, dass die Dosiervorrichtung zur Schmutzanfälligkeit neigt. Diese Schmutzanfälligkeit ist u.a. auf die Anordnung der Saatgutdosierleitung zurückzuführen, wie sie in der WO 2010/ 059 101 A1 offenbart ist, da hiermit jeweils nur Körner aufgenommen werden können. An der Scheibe anhaftende Schmutzpartikel werden dagegen über die Saatgutdosierleitung nicht mit ausgestoßen, sondern verbleiben in der Kammer, so dass diese allmählich mit Schmutzpartikeln angereichert wird.

Ein weiterer Nachteil besteht darin, dass die Körner unmittelbar nach Unterbrechung der Druckdifferenz eine Bewegung senkrecht zur Scheibe ausführen, was wiederum die Aufnahme der Körner durch die Saatgutdosierleitung erschwert, bzw. was wiederum eine präzise Anordnung des Saatguteinlass zur Dosierscheibe erfordert. Allerdings können diese senkrechten Bewegungen bei verschiedenen Saatgutsorten variieren, so dass ggf. bei verschiedenen Saatgutsorten verschiedene Anordnungen für eine optimale Kornabgabe nötig wären. Ebenso hat sich in der Praxis herausgestellt, dass die Saatgutdosierleitung im Bereich der Kornabgabe sehr verschleißanfällig ist.

Das Ziel der vorliegenden Erfindung ist es, eine Dosiervorrichtung zu schaffen welche unempfindlich gegenüber Schmutz ist, welche mit nur einer Druckquelle versorgt werden muss und bei der eine verbesserte Kornabgabe von einem Dosierorgan und/oder einer Dosierscheibe in eine Saatgutdosierleitung und eine Saatfurche gewährleistet wird.

Diese Ziele der Erfindung werden mit einer Dosiervorrichtung gemäß den Merkmalen des unabhängigen Anspruchs erreicht. Merkmale vorteilhafter Weiterbildungen der Erfindung ergeben sich aus den abhängigen Ansprüchen.

So sieht die vorliegende Erfindung eine Dosiervorrichtung für eine landwirtschaftliche Maschine zur vereinzelten Abgabe von Körner wie Saatgut vor. Die Dosiervorrichtung kann bspw. Teil einer Reiheneinheit sein, welche an einem Rahmenelement der Maschine angebracht ist. Die Verbindung kann mit Hilfe einer Stützvorrichtung bspw. in Form einer Viergelenkanordnung bzw. eines Parallelogramms erfolgen. An der landwirtschaftlichen Maschine können darüber hinaus eine Mehrzahl derartiger Reiheneinheiten angebracht sein. Die Reiheneinheit weist u. a. furchenöffnende sowie furchenschließende Werkzeuge auf, welche bspw. als Doppelscheibenschar oder als Einscheibenschar oder dergl. gebildet sein können. Ebenso wären Zinkensysteme vorstellbar.

Die Dosiervorrichtung umfasst ein Gehäuse mit einer Kornzuführung und einem Saatgutvorrat zur Aufnahme der auszubringenden Stoffe bzw. der Körner, und eine Kammer, in welche der Saatgutvorart mündet. Die Zuführung der Körner kann bspw. mittels eines Vorratsbehälters, der auf der Reiheneinheit montiert ist, oder mittels eines pneumatischen Fördersystems erfolgen. In der Kammer herrscht ein Druckniveau P1, welches bspw. von einem an der Maschine angebrachten Druckerzeugungsglied erzeugt wird. Somit liegt im Gehäuse bzw. in der Kammer bspw. ein Überdruckniveau an. In der Dosiervorrichtung ist ein drehbar gelagertes Dosierorgan vorhanden, welches die Kammer im Gehäuse begrenzt. In diesem Dosierorgan sind entlang wenigstens einer Kurvenbahn, vorzugsweise entlang wenigstens einer Kreisbahn, in regelmäßigen Abständen Aussparungen angebracht. Diese Aussparungen verbinden die Kammer mit einem Bereich mit einem geringeren vorherrschenden Druckniveau P2, wodurch ein Differenzdruck entsteht und Körner aus der Kammer an den Aussparungen gehalten bzw. von diesen aufgenommen werden.

Es wäre auch vorstellbar, dass das Druckniveau P2 als Unterdruckniveau ausgebildet ist und dieses mittels eines Unterdruckgebläses erzeugt wird. In diesem Fall würde in der Kammer P1 kein Überdruckniveau vorherrschen sondern bspw. der Umgebungsdruck, bzw. ein Druck der höher ist als das Unterdruckniveau P2.

Das Dosierorgan ist vorzugsweise als Scheibe ausgebildet, es wären aber auch andere Ausgestaltungen vorstellbar. Die Aussparungen sind vorzugsweise als Bohrungen ausgeführt, ebenso denkbar wären aber auch Schlitze oder Nuten oder Langlöcher oder dergl. Die Aussparungen erstrecken sich in regelmäßigen Abständen entlang wenigstens einer Kurvenbahn bzw. einer Kreisbahn über die gesamte Dicke bzw. Materialstärke des Dosierorgans.

Durch Rotation des Dosierorgans werden die Körner innerhalb der Dosiervorrichtung zu einem Kornabgabebereich befördert, wobei wiederum in diesen Kornabgabebereich eine Saatgutdosierleitung mündet und mittels dieser die vereinzelten Körner in eine, mittels der Furchenwerkzeuge, erzeugten Saatfurche abgelegt werden. Der Kornabgabebereich wird mit einem Druckniveau, in Form eines Überdrucks beaufschlagt, welcher bspw. durch einen separaten Anschluss, oder durch eine Verbindung mit der Kammer erzeugt wird. Da am Auslass der Saatgutdosierleitung in der Saatfurche der Umgebungsdruck herrscht, entsteht durch das Druckniveau im Kornabgabebereich ein Differenzdruck, was somit in der Saatgutdosierleitung zu einem Luftstrom führt, durch welchen die Körner nach dem Lösen vom Dosierorgan und nach Abgabe in die Saatgutdosierleitung eine aktive Beschleunigung erfahren, wodurch ein Verspringen der Körner in der Saatgutdosierleitung weitgehend unterbunden bzw. derartig verringert werden kann, das dies keinen bzw. nur noch einen vernachlässigbar geringen Einfluss auf die Ablagegenauigkeit hat und somit eine kontinuierlich gleichmäßige Kornablage in einer Saatfurche erreicht wird.

Die Körner werden durch Rotation des Dosierorgans entlang der Kurvenbahn und entlang einer Führungsbahn eines Führungselementes zum Kornabgabebereich befördert, wobei in diesem Kornabgabebereich eine Saatgutdosierleitung zur Abgabe der Körner in eine mittels Furchenwerkzeugen erzeugte Saatfurche mündet. Zudem herrscht im Kornabgabebereich ein Druckniveau, wobei durch dieses Druckniveau ein Luftstrom in der Saatgutdosierleitung erzeugt wird, wodurch die Körner in dieser eine aktive Beschleunigung erfahren. Bei der erfindungsgemäßen Dosiervorrichtung ist zudem vorgesehen, dass die Führungsbahn des Führungselementes zumindest abschnittsweise die gleiche Längsrichtung bzw. Ausrichtung wie die Saatgutdosierleitung aufweist, wodurch eine geführte Luftströmung erzeugt wird und dass weitgehend alle Körner und/oder Fremdstoffe, welche den Kornabgabebereich erreichen, zwangsgeführt entlang der Führungsbahn des Führungselementes in die Saatgutdosierleitung abgegeben werden. Diese Anordnung der Führungsbahn weist den Vorteil auf, dass Körner und/oder Schmutzpartikel, welche sich ggf. durch das Unterbrechungselement nicht vom Dosierorgan lösen, ebenso zwangsgeführt in die Saatgutdosierleitung abgegeben werden, wodurch die Verschmutzungsanfälligkeit der Dosiervorrichtung stark reduziert ist. Ebenso werden durch eine derartige Anordnung jegliche am Dosierorgan anhaftende Schmutzpartikel oder dergl. Fremdstoffe über die Saatgutdosierleitung abgegeben.

Die Erfindung kann zudem vorsehen, dass der Luftstrom in der Saatgutdosierleitung variiert werden kann. Hierzu sind diverse Lösungsansätze vorstellbar. Zum einen kann der Kornabgabebereich mit der Kammer wirkverbunden sein, so dass in der Dosiervorrichtung auf der den Körnern zugewandten Seite nahezu das gleiche Druckniveau vorherrscht. Auch ist es vorstellbar, dass der Kornabgabebereich über einen separaten Druckanschluss mit dem Druckerzeugungsglied oder mit der Luftversorgungsleitung der Kammern in Verbindung ist, so dass zwischen der Kammer und des Kornabgabebereichs unterschiedliche Druckniveau vorherrschen können. Die zusätzliche Verbindung könnte zudem über ein Variationsglied verfügen, mittels welchem der Luftstrom bzw. der Überdruck in der Saatgutdosierleitung variiert werden kann.

In einer bevorzugten Ausgestaltungsform ist der Kornabgabebereich mit der Kammer verbunden bzw. ist der Saatguteinlass in der Kammer der Dosiervorrichtung angeordnet, wodurch der Überdruck der Kammer gleichzeitig auch zur Erzeugung des Luftstroms in der Saatgutdosierleitung verwendet wird.

Die Dosiervorrichtung kann gemäß einer weiteren Ausführungsvariante im Wesentlichen in fünf Bereiche unterteilt werden. Zunächst werden in einem ersten Bereich, mittels Druckdifferenz an den Aussparungen des Dosierorgans Körner aus der Kammer aufgenommen. Anschließend werden diese im zweiten Bereich entlang der Kurvenbahn bzw. durch Rotation des Dosierorgans zum Kornabgabebereich transportiert. Dem zweiten Bereich ist darüber hinaus noch eine Vereinzelungsvorrichtung und/oder Vereinzelungselemente zugeordnet, mittels derer überschüssige Körner, welche ggf. an den Aussparungen anhaften abgestoßen werden, wodurch wiederum gewährleitstet werden kann, dass sich jeweils nur noch ein Korn an den Aussparungen befindet. Die Vereinzelungsvorrichtungen können verschiedenste Ausgestaltungsformen aufweisen und sind aus dem Stand der Technik bereits in vielfacher Weise bekannt. Vorzugsweise findet eine Vereinzelungsvorrichtung Verwendung, welche der, aus der EP 1 928 223 B1 bekannt gewordenen entspricht. Es wären aber auch diverse andere Vereinzelungsvorrichtungen und/oder Vereinzelungselemente denkbar. Weiter kann die Vereinzelungsvorrichtung derartig montierbar sein, dass diese entlang der Kurvenbahn des Dosierorgan radial versetzt werden kann, so dass sich diese näher am Bereich eins als am Bereich drei befindet oder umgekehrt. Hierdurch wird ermöglicht, dass der Abstand zwischen Kornaufnahme und Vereinzelungsvorrichtung entsprechend der auszubringenden Körner gewählt werden kann.

Im dritten Bereich erfolgt die Unterbrechung der Druckdifferenz an den Aussparungen. Hierfür sind an der den Körnern abgewandten Seite der Dosiervorrichtung Unterbrechungselemente angebracht. Diese können bspw. als Rolle, als Dichtelement oder als Scheibe oder dergl. ausgebildet sein. Die Größe dieser ist vorzugsweise derartig gewählt, dass jeweils wenigstens eine Aussparung, zumindest kurzzeitig, komplett abgedeckt wird.

Im vierten Bereich erfolgt eine Richtungsänderung der Körner, welche aus einer Kreisbewegung entlang der Kurvenbahn in eine vorzugsweise tangentiale zur Kurvenbahn gerichtet ist. Dies geschieht mittels einer Richtungsänderung der Luftströmung, welche in den Bereichen eins bis drei durch die Druckdifferenz jeweils senkrecht zu den Aussparungen gerichtet ist und durch die Unterbrechung der Druckdifferenz im Bereich drei und im Bereich vier umgelenkt wird. Hierzu sind im Bereich vier Führungselemente vorhanden, welche zumindest abschnittweise die weitestgehend gleiche Richtung aufweisen wie die Saatgutdosierleitung, wodurch eine geführte Luftströmung in diese Richtung entsteht. Durch diesen vierten Bereich entsteht somit eine wesentlich verbesserte Kornabgabe, da die Körner einen "gewissen Zeitraum" erhalten, um sich vom Dosierorgan zu lösen und in die Saatgutdosierleitung abgegeben zu werden.

Anschließend werden die Körner im fünften Bereich in die Saatgutdosierleitung abgegeben bzw. von dieser aufgenommen, wozu diese im fünften Bereich einen Saatguteinlass aufweist.

Der Kornabgabebereich weist dementsprechend drei Bereiche auf, den dritten zum Lösen der Körner vom Dosierorgan, den vierten zur Richtungsänderung und zum nahtlosen Übergang in die Saatgutdosierleitung und den fünften, welchen die Saatgutdosierleitung bzw. dessen Saatguteinlass zugeordnet ist. Der Differenzdruck ist bzw. wird am Dosierorgan vorzugsweise in den Bereichen drei, vier und fünf (siehe zu den Bereichen die nachfolgende Figurenbeschreibung) jeweils unterbunden bzw. der Differenzdruck liegt nun an der Saatgutdosierleitung an.

Durch eine derartige Anordnung unterscheidet sich die vorliegende Erfindung vom Stand der Technik, aus welchem nur eine Punktabgabe bereits bekannt ist. So weisen die aus dem Stand der Technik bekannten Dosiervorrichtungen keinen derartigen vierten Bereich auf, sondern es erfolgt unmittelbar nach der Differenzdruckunterbrechung eine Abgabe der Körner in eine Saatgutdosierleitung, was häufig zu Problemen führen kann. Ebenso werden keine zusätzlichen Abstreifelemente wie bisher benötigt, da die Richtungsänderung der Körner aufgrund einer Richtungsänderung der Luftströmung erfolgt.

Wird die erfindungsgemäße Dosiervorrichtung jeweils in fünf Bereiche unterteilt, wäre es auch denkbar, weniger oder noch weitere Bereiche zu definieren, so dass diese bspw. nur vier oder sechs oder mehr Bereiche umfasst, wobei der Begriff Bereich hier derartig zu verstehen ist, dass in diesem jeweils eine Aktion der Körner in der Dosiervorrichtung erfolgt, welche sich im Wesentlichen in fünf Aktionen bzw. Bereiche aufteilen lassen.

Der vierte Bereich ist derartig konzipiert, dass dieser eine Länge (A) aufweist, welche größer oder gleich dem Produkt aus

Abstand (B) = Abstand Dosierorgan zu Rückwand Saatgutdosierleitung Multipliziert mit dem Faktor 0,4 ist.

Dieser Sachverhalt lässt sich mathematisch wie folgt darstellen:

$$A \geq B \times 0,4$$

Durch diese Anordnung wird ermöglicht, dass die Körner nach dem Lösen vom Dosierorgan eine gewisse Wegstrecke zur Verfügung haben, um in die Saatgutdosierleitung überführt zu werden. Zu Beginn des Bereichs fünf ist der Saatguteinlass so angeordnet, dass der Abstand auch als Ende von Bereich drei zum Saatguteinlass definiert werden kann.

Im Bereich vier werden die Körner durch die Luftströmung entlang von drei Seitenflächen geführt. Diese Seiten sind als vordere Seite das Dosierorgan und jeweils zwei Flächen hierzu, welche vorzugsweise in einem Winkel von 90° zu diesen angebracht sind. Eine Rückwand ist somit nicht vorhanden, bzw. kann die Rückwand als Einlaufschräge ausgebildet sein, welche in Richtung des Saatguteinlass geneigt ist. Durch diese Einlaufschräge kann die Luftströmung gezielt in Richtung des Saatguteinlass gelenkt werden, auch werden Ablagerungen durch die Schräge in Richtung der Saatgutdosierleitung abgegeben. Eine Rückwand bzw. eine geschlossene oder kontinuierliche Kontur entsteht im fünften Bereich durch die Saatgutdosierleitung, wobei die Rückwand vorzugsweise Bogenförmig geformt ist und in deren maximalen Abstand zum Dosierorgan den Abstand (B) definiert. Die Begriffe geschlossene oder kontinuierliche Kontur sind in diesem Zusammenhang so zu verstehen, dass diese nicht nur durch die Saatgutdosierleitung gebildet werden, sondern auch andere Elemente, wie bspw. Konturen des Dosierorgans mit enthalten sein können.

Die Saatgutdosierleitung kann zudem zumindest abschnittsweise tangential zur Kurvenbahn des Dosierorgan angebracht sein, wodurch die Kornabgabe weiter verbessert werden kann, da die Körner ohnehin nach dem Lösen vom Dosierorgan bzw. beim Verlassen der Kurvenbahn aufgrund von Zentrifugalkräften das Bestreben haben, in eine lineare bzw. die Kurvenbahn verlassende Bewegung überzugehen.

Weiter sieht die Erfindung vor, dass die Saatgutdosierleitung in Bezug auf das Dosierorgan derartig angeordnet ist, dass diese das Dosierorgan hinterschneidet. Das bedeutet, dass bspw. die bogenförmige Kontur der Dosierleitung auf der dem Dosierorgan zugewandten Seite unterbrochen ist und somit der Mittelpunkt der Saatgutdosierleitung und das Dosierorgan bzw. die Kurvenbahn dieses auf einer Ebene liegen, was sich wiederum positiv auf die Kornabgabe auswirkt, da somit der größte mögliche Querschnitt der Saatgutdosierleitung für die Kornaufnahme zu Verfügung steht. Ebenso wäre es jedoch auch vorstellbar, dass die Kurvenbahn und der Mittelpunkt nicht auf einer Ebene, sondern versetzt zueinander angeordnet sind, was dann von Vorteil wäre, wenn die Körner beim Unterbrechen der Druckdifferenz eine Bewegung senkrecht zu den Aussparungen ausführen würden und somit versetzt zum Dosierorgan abgeben werden. Ebenso könnte die Saatgutdosierleitung in einem Winkel zum Dosierorgan angebracht sein. Der Saatguteinlass kann durch eine derartige Anordnung verschiedenste Ausgestaltungen aufweisen. Auch kann der Querschnitt der Saatgutdosierleitung im Bereich fünf in Richtung des Bereichs vier aufgeweitet sein, was bedeutet, dass der Saatguteinlass bspw. einen größeren Querschnitt als die Saatgutdosierleitung aufweist, bzw. dass die Saatgutdosierleitung im Kornabgabebereich einen sich verändernden Querschnitt aufweist, welcher nach dem Verlassen der Dosiervorrichtung bzw. des Gehäuse konstant wird.

Dem Kornabgabebereich ist darüber hinaus ein Führungselement mit Führungsbahn derartig zugeordnet, dass durch diese eine geführte Luftströmung entsteht, welche zumindest abschnittsweise die Richtung der Saatgutdosierleitung aufweist. Durch diese Luftströmung werden darüber hinaus im vierten und fünften Bereich die Körner ausschließlich durch diese getragen bzw. geführt und in Richtung der Saatgutdosierleitung befördert.

Ebenso wäre es vorstellbar, dass die Körner im vierten Bereich von einer geführten Luftströmung und einem Führungselement getragen und/oder geführt werden, und dass die Körner im fünften Bereich von einer geführten Luftströmung und der Saatgutdosierleitung getragen und/oder entlang dieser geführt werden.

Der Abstand zwischen Bereich vier und Bereich fünf bezieht sich somit vorzugsweise zum einen auf den Abgabepunkt der Körner vom Dosierorgan bzw. dem Ende des Unterbrechungselements und zum anderen auf den Saatguteinlass der Saatgutdosierleitung, welcher dadurch definiert ist, dass dieser zusammen mit dem Dosierorgan einen geschlossenen Umfang bildet. Dieser Abstand wird normalerweise mittels einer Parallelen zum Dosierorgan gemessen.

Die Führungsbahn ist somit derartig angeordnet, dass Körner und/oder Schmutzpartikel, welche sich ggf. durch das Unterbrechungselement nicht vom Dosierorgan lösen, ebenso zwangsgeführt in die Saatgutdosierleitung abgegeben werden, wodurch die Verschmutzungsanfälligkeit der Dosiervorrichtung weitestgehend unterbunden wird. Zusätzlich ist dem vierten bzw. fünften Bereich auf der den Körnern abgewandten Seite noch eine Ausdrückrolle oder ein vergleichbares Ausdrückelement zugeordnet, welches ebenfalls mittels stiftartigen Dornen überschüssige Körner und Fremdstoffe aus den Aussparungen des Dosierorgans entfernen und diese somit ebenfalls in die Saatgutdosierleitung abgegeben werden. Auch wäre denkbar, dass eine zusätzliche Druckluft durch die Öffnungen strömen würde und Fremdstoffe somit aus den Aussparungen blasen würde. Eine derartige Anordnung im vierten bzw. fünften Bereich hat gegenüber dem aus dem Stand der Technik bekannten Ausdrückelementen und deren Anordnung den Vorteil, dass somit Fremdstoffe bzw. Schmutzpartikel ebenso in die Saatgutdosierleitung abgegeben werden und somit die Verschmutzungsanfälligkeit verringert wird.

Der Dosiervorrichtung können darüber hinaus Mittel zugeordnet sein, welche den ersten und Teile des zweiten Bereichs vom dritten, vierten und fünften Bereich trennen, wodurch jegliche Stoffe und Elemente welche den Dritten Bereich erreichen, zwangsgeführt durch die Saatgutdosierleitung abgegeben werden. Diese Mittel sind vorzugsweise luftdurchlässig bspw. in Form von Bürsten ausgeführt. Es wären aber auch andere Mittel vorstellbar, bspw. Elemente aus festem Material. Um für die Kornabgabe bei einer derartigen Ausgestaltung jedoch keine zusätzliche Luftversorgung zu benötigen, können diese bspw. auch unterbrochen werden oder anderweitig luftdurchlässig sein.

Die Größe der einzelnen Bereiche bzw. die von den einzelnen Bereichen eingeschlossenen Winkel können verschiedenste Werte aufweisen. Bei einer Ausführungsvariante sind diese Winkel wie folgt gewählt: der erste Bereich kann ein Segment von mindestens 60° überstreichen, der zweite Bereich ein Segment von mindestens 90°, der dritte Bereich von mindestens 5°, der vierte Bereich von mindestens 5° und der fünfte Bereich von mindestens 20°, wobei diese, je nach Definition von Bereichen und in Abhängigkeit des Durchmessers der Dosiervorrichtung auch anders gewählt werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine perspektivische Ansicht einer Ausführungsform einer erfindungsgemäßen Dosiervorrichtung.

Fig. 2 zeigt eine vereinfachte Vorderansicht im Schnitt einer Ausführungsform der erfindungsgemäßen Dosiervorrichtung.

Fig. 3 zeigt eine Seitenansicht der Dosiervorrichtung gemäß Fig. 1 aus der den Körnern zugewandten Seite, ohne Gehäuse.

Fig. 4 zeigt eine Seitenansicht der Dosiervorrichtung gemäß Fig. 1 und Fig. 2 aus der den Körnern abgewandten Seite, ohne Gehäuse und Dosierorgan.

Fig. 5 zeigt eine perspektivische Ansicht einer Ausführungsform der Elemente der Kornabgabe.

Fig. 6a zeigt in einer vereinfachten Draufsicht im Schnitt einer Ausführungsform der Anordnung der Saatgutdosierleitung zum Dosierorgan, auf Höhe des Saatguteinlasses.

Fig. 6b zeigt in einer Vorderansicht eine Ausführungsform der Saatgutdosierleitung bzw. des Saatguteinlasses.

Fig. 6c zeigt in einer perspektivischen Ansicht eine Ausführungsform der Saatgutdosierleitung bzw. des Saatguteinlasses.

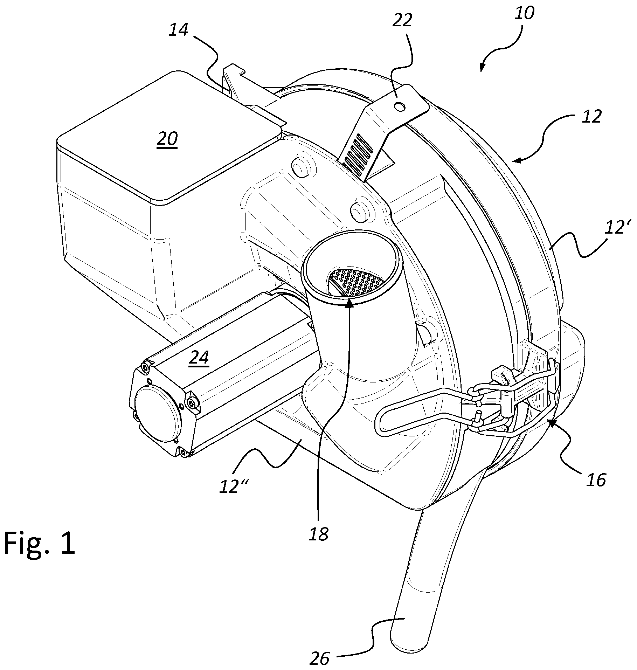

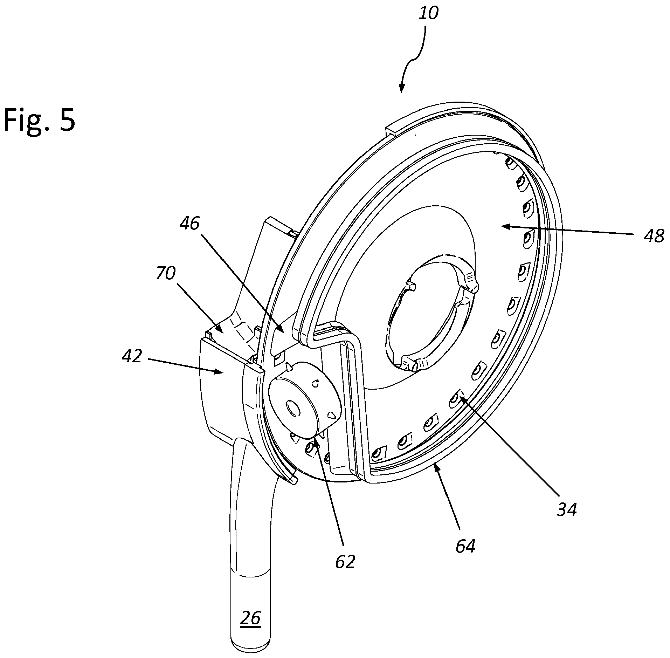

Für gleiche oder gleich wirkende Elemente der Erfindung werden in den Figuren 1 bis 6 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Dosiervorrichtung ausgestaltet sein kann und stellen keine abschließende Begrenzung dar.

Die perspektivische Ansicht der Fig. 1 zeigt eine Ausführungsform einer erfindungsgemäßen Dosiervorrichtung 10. Derartige Dosiervorrichtungen 10 finden bei landwirtschaftlichen Maschinen (hier nicht dargestellt) insbesondere zur vereinzelten Abgabe von granulatartigen Materialen wie Saatgut und/oder Dünger Verwendung. Die gezeigte Dosiervorrichtung 10 besteht im Wesentlichen aus einem mehrteiligen Gehäuse 12, welches sich aus wenigstens einer vorderen Gehäusehälfte 12' und einer hinteren Gehäusehälfte 12'' zusammensetzt. Die beiden zueinander passenden Gehäusehälften 12' und 12'' sind mittels Scharnieren 14 und wenigstens einem Verschluss 16 verbunden, so dass sie bei Bedarf leicht um die Scharniere 14 geschwenkt werden können, um das Innere des Gehäuses 12 zugänglich zu machen. Das Gehäuse 12 weist an einer Oberseite einen Lufteinlass 18 auf, mittels dem die Dosiervorrichtung 10 mit einem gewünschten Druckniveau versorgt wird, welches von einer der landwirtschaftlichen Maschine zugeordneten, hier jedoch nicht dargestellten, Druckerzeugungseinheit erzeugt wird.

Die Dosiervorrichtung 10 wird über eine Kornzuführung bzw. einen am oberen Bereich der Gehäuserückseite 12'' angebauten Saatgutvorrat 20 mit dem auszubringen Material - normalerweise in Form von Samenkörnern - versorgt. Wahlweise kann dieser Saatgutvorrat 20 durch einen Behälter gebildet sein, wie er in der Fig. 1 gezeigt ist. Ebenso möglich ist es, dass der Saatgutvorrat 20 einen Versorgungsanschluss aufweist, um somit mittels eines pneumatisch arbeitenden Saatgutfördersystems kontinuierlich mit nachgefördertem Saatgut oder Körnern versorgt zu werden. Um die in das Gehäuse 12 geförderte Saatgutmenge variieren zu können, kann die Dosiervorrichtung 10 zusätzlich einen Schieber 22 aufweisen, mittels welchem die Öffnung des Saatgutvorrats 20 je nach Bedarf schrittweise geöffnet bzw. geschlossen werden kann. Der Schieber 22 ist in der gezeigten Darstellung als mechanisch betätigbarer Hebel ausgebildet. Denkbar sind jedoch auch andere Varianten eines solchen Schiebers, bspw. elektromotorisch betätigbare Ventil- bzw. Durchlasssteuerungen o. dgl.

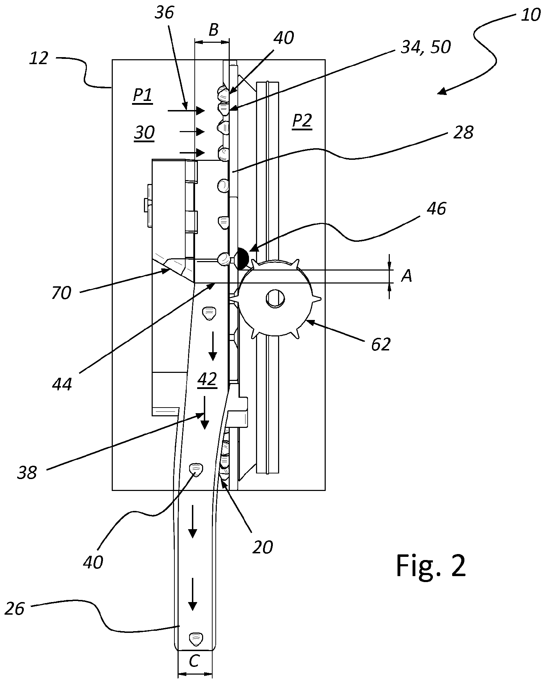

Auf der Rückseite 12'' des Gehäuses 12 ist ein Antriebsmotor 24 angebracht, mittels dem das im Inneren des Gehäuses 12 rotierende Dosierorgan 28 (vgl. Figuren 2 ff.) direkt angetrieben wird. Im Ausführungsbeispiel ist dieser Antriebsmotor 24 als Elektromotor ausgebildet. Ebenso denkbar sind jedoch auch andere Antriebsarten für den Antriebsmotor 24, so etwa ein hydraulisch arbeitender Motor.

Eine Saatgutdosierleitung 26 mündet darüber hinaus in einem unteren Bereich des Gehäuses 12 der Dosiervorrichtung 10, im gezeigten Ausführungsbeispiel in die hintere Gehäusehälfte 12" des Gehäuse 12.

Die Fig. 2 zeigt in einer stark vereinfachten Schnittansicht die generelle Wirkweise der Dosiervorrichtung 10. Das Gehäuse 12 ist in Fig. 2 lediglich schematisch angedeutet. Im Gehäuse 12 ist das um eine in etwa horizontale Achse rotierende scheibenförmige Dosierorgan 28 dargestellt. Dieses scheibenförmige Dosierorgan 28 unterteilt das Gehäuse 12 bzw. den Innenraum der Dosiervorrichtung 10 in zwei Hälften, in denen jeweils unterschiedliche Druckniveaus P1 bzw. P2 vorherrschen. Das Gehäuse 12 weist zudem eine Kammer 30 auf, in der sich auch der Saatgutvorrat 20 befindet. In der Kammer 30 wie auch im Saatgutvorrat 20 herrscht im Wesentlichen das erste Druckniveau P1.

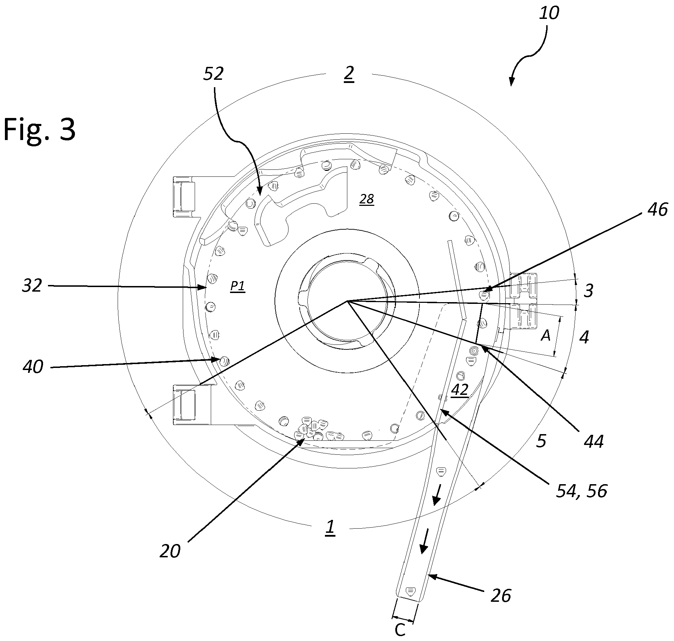

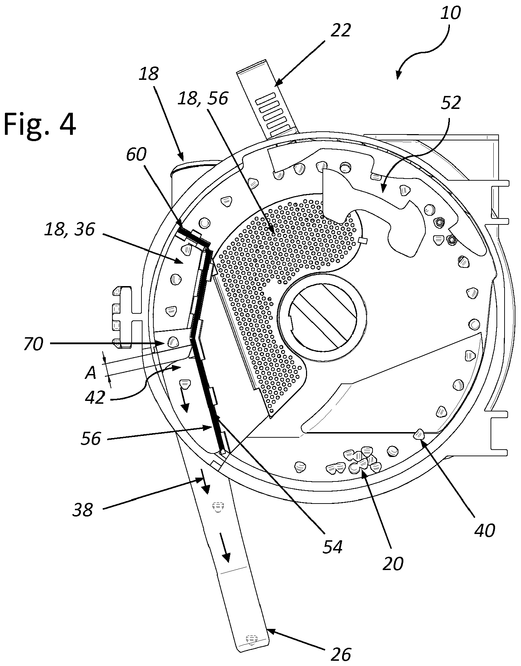

Das rotierende Dosierorgan 28 weißt in regelmäßigen Abständen und entlang einer hier nicht dargestellten Kurvenbahn (vgl. Fig. 3, Fig. 4) eine Vielzahl von Aussparungen 34 auf, welche jeweils die unterschiedlichen Druckbereiche P1 und P2 verbinden. Hierdurch herrscht an den Aussparungen 34 aufgrund der unterschiedlichen Druckniveaus P1 und P2 ein Differenzdruck, wodurch an jeder Aussparung 34 eine Luftströmung 36, welche senkrecht zum Dosierorgan 28 gerichtet ist, gebildet ist. Wie es die Fig. 2 erkennen lässt, liegt das erste Druckniveau P1 links höher als das zweite Druckniveau P2 rechts, so dass die Luftströmung 36 nach rechts gerichtet ist.

Durch diesen Differenzdruck werden von den Aussparungen 34 jeweils Körner 40 aufgenommen und durch Drehung des Dosierorgans 28 entlang der Kurvenbahn 32 zu einem Kornabgabebereich 42 transportiert (vgl. Fig. 3, Fig. 4).

Der Kornabgabebereich 42 mündet ebenfalls in die Kammer 30. Zudem weist die Saatgutdosierleitung 26 einen Saatguteinlass 44 auf, welcher in die Kammer 30 mündet, so dass im Kornabgabebereich 42 ebenfalls weitestgehend das gleiche Druckniveau P1 vorherrscht.

Im Kornabgabebereich 42 ist dem rotierenden Dosierorgan 28 auf dessen Rückseite wenigstens ein Unterbrechungselement 46 zugeordnet, mittels welchem die Druckdifferenz bzw. die senkrechte Luftströmung 36 unterbrochen wird, wodurch sich die Körner 40 vom Dosierorgan 28 lösen. Ebenso entsteht durch die Unterbrechung der senkrechten Luftströmung 36 durch den Differenzdruck, der zwischen Saatguteinlass 44 und Saatgutdosierleitung 26 herrscht, eine geführte Luftströmung 38, welche in Richtung der Saatgutdosierleitung 26 gerichtet ist und mittels welcher die Körner 40 nach dem Ablösen vom Dosierorgan 28 eine aktive Beschleunigung in Richtung der Saatgutdosierleitung 26 erfahren.

Um Körner 40 an vorgesehener Stelle zu entfernen, die nicht durch das Unterbrechungselement 46 vom Dosierorgan 28 abgelöst wurden, kann dem Kornabgabebereich 42 ein zusätzliches Ausdrückelement 62 zugeordnet sein. Mittels dieses zusätzlichen Ausdrückelementes 62 werden mit Stiften oder dergleichen die Körner 40 ebenso von den Aussparungen 34 entfernt, indem die Stifte jeweils in die Aussparungen 34 eingreifen und/oder durch diese hindurch stechen. Zudem werden mit Hilfe des Ausdrückelementes 62 auch andere Elemente als Körner 40, so bspw. Schmutzpartikel und/oder Staubpartikel, welche an den Aussparungen 34 oder dem Dosierorgan 28 anhaften, vom Dosierorgan 28 gelöst und in die Saatgutdosierleitung 26 mit abgegeben, wodurch diese Staub- oder Schmutzpartikel nicht wieder in den Saatgutvorrat 20 zurückbefördert werden, wodurch die Verschmutzungsanfälligkeit der Dosiervorrichtung 10 insgesamt deutlich verbessert bzw. verringert werden kann.

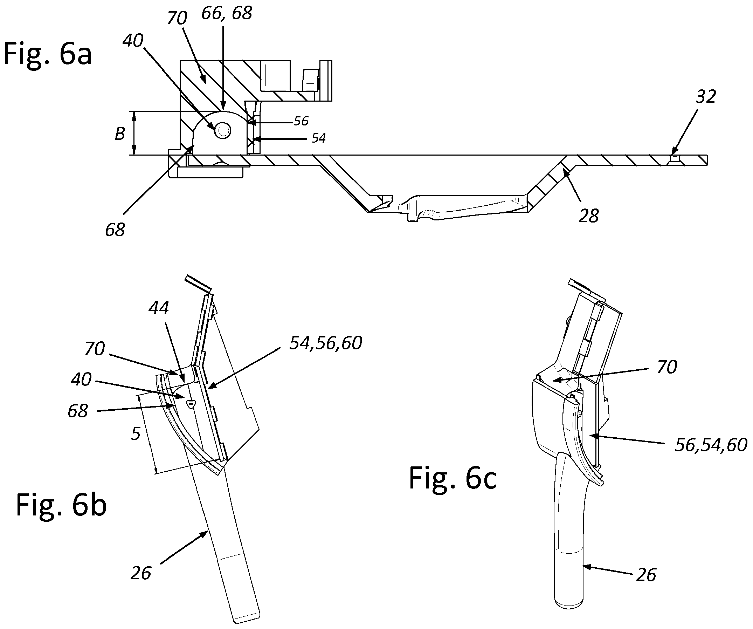

Durch das untere Ende des Unterbrechungselements 46 und den Beginn des Saatguteinlasses 44 bzw. den Beginn der Saatgutdosierleitung 26 ist das Abstandmaß A definiert. Dieses Maß A entspricht einem weiter unten näher erläuterten vierten Bereich 4 (vgl. hierzu Fig. 3). Darüber hinaus definiert das Maß B den Abstand zwischen dem scheibenförmigen Dosierorgan 28 und dem maximalen Abstand zur Rückwand der Saatgutdosierleitung 26. Dieser Abstand wird in dem Bereich erreicht, in dem der Saatguteinlass 44 bzw. die Saatgutdosierleitung 26 erstmals eine geschlossene bzw. kontinuierliche Kontur hat, was anhand der Fig. 6 näher erläutert wird. Gegenüberliegend zum Dosierorgan 28 befindet sich eine Einlassschräge 70, welche in Richtung des Saatguteinlasses 44 geneigt ist. Mittels dieser Einlassschräge 70 wird die Luftströmung in Richtung des Saatguteinlasses 44 gelenkt. Das Maß C definiert die Breite und/oder den Durchmesser der Saatgutdosierleitung 26. Im ausgeführten Beispiel können die Maße B und C annähernd gleiche Werte aufweisen.

Die schematische Seitenansicht der Fig. 3 zeigt die Dosiervorrichtung 10, bei der Teile des Gehäuses 12 ausgeblendet wurden. Die Dosiervorrichtung 10 ist in Fig. 3 aus der den Körnern 40 zugewandten Seite des Dosierorgan 28 bzw. von der Seite zu sehen, in dem das Druckniveau P1 vorherrscht. Auch die Fig. 4 zeigt eine Seitenansicht der Dosiervorrichtung 10, bei der wiederum Teile des Gehäuses 12 und das Dosierorgan 28 ausgeblendet wurden. Die Dosiervorrichtung 10 ist in Fig. 4 aus der den Körnern 40 abgewandten Seite des Dosierorgan 28 bzw. von der Seite zu sehen, in dem das Druckniveau P2 vorherrscht.

Wie es die schematische Darstellung der Fig. 3 erkennen lässt, ist die Dosiervorrichtung 10 in fünf umfänglich sich aneinander anschließende Bereiche unterteilt, die mit den Bezugsziffern 1, 2, 3, 4 und 5 bezeichnet sind. In einem ersten Bereich 1 werden aufgrund einer an den Aussparungen 34 des Dosierorgans 28 anliegenden Druckdifferenz Körner 40 aus dem Saatgutvorrat 20 bzw. der Kammer 30 aufgenommen, wobei idealerweise an jeder der Aussparungen 34 jeweils ein Korn 40 angesaugt bzw. angedrückt wird und bei der weiteren rotierenden Bewegung des Dosierorgans 28 anhaftet. Anschließend werden diese an den Aussparungen 34 des Dosierorgans 28 anhaftenden Körner 40 im zweiten Bereich 2 durch die Rotation des Dosierorgans 28 entlang einer Kurvenbahn 32 zum Kornabgabebereich 42 transportiert.

Auch im zweiten Bereich 2 ist ebenso wie im ersten Bereich 1 eine Druckdifferenz vorhanden bzw. entspricht jener des ersten Bereichs 1. Dem zweiten Bereich 2 ist darüber hinaus noch eine Vereinzelungsvorrichtung bzw. Vereinzelungselemente 52 zugeordnet, mittels der bzw. denen überschüssige Körner 40, die ggf. an den Aussparungen 34 anhaften können, abgestoßen bzw. abstreift werden. Die Vereinzelungsvorrichtung 52 ist aus insgesamt fünf nasenförmigen Elementen gebildet, welche kreisförmig entlang der Kurvenbahn 32 angeordnet sind.

Die Vereinzelungsvorrichtung kann insbesondere derjenigen entsprechen, die bereits aus der EP 1 928 223 B1 bekannt geworden ist. Es sind jedoch auch andere Varianten von Vereinzelungsvorrichtungen und/oder Vereinzelungselementen vorstellbar bzw. anwendbar, die denselben Zweck erfüllen, überzählige Körner 40 abzustreifen und Doppelbelegungen an den Aussparungen 34 zu verhindern. Die Vereinzelungsvorrichtung 52 ist darüber hinaus in einer Weise in der Dosiervorrichtung 10 bzw. dem Gehäuse 12 montiert, das sie entlang der Kurvenbahn 32 versetzt werden kann, um somit den Abstand zum ersten Bereich 1 oder zum dritten Bereich 3 verändern bzw. variieren zu können.

In diesem sich an den zweiten Bereich anschließenden dritten Bereich 3 erfolgt die Unterbrechung der Druckdifferenz an den Aussparungen 34 mittels wenigstens eines, sich an der den Körnern 40 abgewandten Seite des Dosierorgans 28 befindlichen Unterbrechungselementes 46 (vgl. Fig. 2). Dieses Unterbrechungselement 46 ist im ausgeführten Beispiel als Dichtelement 64 ausgeführt, welches auch als Abdichtung der Dosiervorrichtung 10 gegenüber der Umgebung dient. Als Unterbrechungselement 46 wären jedoch auch eine Scheibe, eine Rolle oder dergl. Elemente vorstellbar (siehe hierzu auch Fig. 2). Die Größe des Unterbrechungselements 46 ist vorzugsweise so gewählt, dass im dritten Bereich 3 jeweils wenigstens eine Aussparung 34 des Dosierorgans 28 vollumfänglich abgedeckt wird. In einer bevorzugten Ausgestaltungsform ist das Unterbrechungselement 46 derartig konzipiert, dass die Aussparungen 28 in den Bereichen 3, 4 und 5 gleichzeitig abgedeckt sind. Der dritte Bereich 3 ist so konzipiert, dass zum Ende dieses dritten Bereichs 3 sich die Körner 40 vom Dosierorgan 28 gelöst haben und anschließend vorzugsweise luftgeführt in den vierten Bereich 4 übergehen.

Im vierten Bereich 4 erfolgt eine Richtungsänderung der Körner 40, welche aus einer Kreisbewegung entlang der Kurvenbahn 32 in eine weitestgehend tangentiale und/oder lineare Richtung zur Kurvenbahn 32 gerichtet ist. Diese Richtungsänderung wird den Körnern 40 mittels einer Richtungsänderung der Luftströmungen aufgeprägt, welche in den ersten beiden Bereichen 1 und 2 und zumindest abschnittweise im dritten Bereich 3 jeweils als senkrechte Luftströmung 36 zu den Aussparungen 34 gerichtet ist, in eine geführte Luftströmung 38, welche entlang der Saatgutdosierleitung 26 und/oder entlang einem dem vierten Bereich 4 zugeordneten Führungselement 54 gerichtet ist. Das Führungselement 54 weist zudem eine Führungsbahn 56 auf, welche zumindest abschnittweise die gleiche Längsrichtung bzw. Ausrichtung wie die Saatgutdosierleitung 26 aufweist, wodurch eine geführte Luftströmung 38 erzeugt wird. Die Luftströmung 38 wird wiederum durch eine Wirkverbindung mit der Kammer 30 erzeugt. Ebenso wäre jedoch auch eine separate Luftversorgung vorstellbar. Das Führungselement 54 kann zudem wahlweise bereits im zweiten Bereich 2 bzw. im dritten Bereich 3 beginnen.

Durch die geführte Luftströmung 38 und/oder die Anordnung der Führungsbahn 56 des Führungselementes 54 werden die Körner 40 in Richtung des fünften Bereich 5 bzw. in Richtung des Saatguteinlasses 44 der Saatgutdosierleitung 26, welcher dem Anfang des fünften Bereich 5 zugeordnet ist, transportiert, von welchem aus die Körner 40 abgegeben werden und mittels dieser in eine, hier nicht dargestellte Saatfurche abgelegt werden.

Der vierte Bereich ist darüber hinaus derartig konzipiert, dass dieser eine Länge A aufweist, welche größer oder gleich dem Produkt aus dem Abstand B - dies ist der Abstand des Dosierorgans zur Rückwand der Saatgutdosierleitung -, multipliziert mit einem Faktor 0,4 ist. Dieser mathematische Zusammenhang lässt sich wie folgt darstellen:

$$A \geq B \times 0{,}4$$

Durch diese Anordnung wird es ermöglicht, dass die Körner 40 nach dem Ablösen vom Dosierorgan 28 eine gewisse Wegstrecke zur Verfügung haben, um in die Saatgutdosierleitung 26 überführt zu werden. Zu Beginn des fünften Bereichs 5 ist der Saatguteinlass 44 angeordnet, so dass der Abstand A auch als Ende vom dritten Bereich 3 zum Saatguteinlass 44 definiert werden kann.

Im vierten Bereich 4 werden die Körner 40 durch die Luftströmung entlang von drei Seitenflächen geführt. Diese Seiten sind als vordere Seite das Dosierorgan 28 und jeweils zwei Flächen hierzu, welche vorzugsweise in einem Winkel von 90° zu diesen angebracht sind, ausgeführt. Eine Rückwand ist somit nicht vorhanden, bzw. es kann die Rückwand als Einlassschräge 70 ausgebildet sein, welche in Richtung des Saatguteinlasses 44 geneigt ist. Durch diese Einlassschräge 70 kann die Luftströmung gezielt in Richtung des Saatguteinlasses 44 gelenkt werden. Eine Rückwand entsteht im fünften Bereich 5 durch die Saatgutdosierleitung 26, wobei die Rückwand vorzugsweise bogenförmig geformt ist und ihr Abstand zum Dosierorgan 28 den Abstand B definiert. Diese Zusammenhänge sind in Fig. 2 erkennbar.

Die Saatgutdosierleitung 26 ist zudem zumindest abschnittsweise tangential zur Kurvenbahn 32 des Dosierorgans 28 angebracht, wodurch die Kornabgabe weiter verbessert werden kann, da die Körner 40 ohnehin nach dem Lösen vom Dosierorgan 28 bzw. beim Verlassen der Kurvenbahn 32, aufgrund von Zentrifugalkräften, das Bestreben haben, in ein lineare Bewegung überzugehen.

Wie es die Figuren 2 bis 6 erkennen lassen, sieht die Erfindung weiter vor, dass die Saatgutdosierleitung 26 bzw. der Saatguteinlass 44 in Bezug auf das Dosierorgan 28 derartig angeordnet ist, dass die Saatgutdosierleitung 26 bzw. der Saatguteinlass 44 das Dosierorgan 28 hinterschneidet. Das bedeutet, dass bspw. die bogenförmige Kontur 66 der Saatgutdosierleitung 26 auf der dem Dosierorgan 28 zugewandten Seite unterbrochen ist und somit der Mittelpunkt der Saatgutdosierleitung 26 und das Dosierorgan 28 bzw. die Kurvenbahn 32 des Dosierorgans 28 auf einer Ebene liegen, was sich wiederum positiv auf die Kornabgabe auswirkt, da somit der größtmögliche Querschnitt der Saatgutdosierleitung 26 für die Kornaufnahme zu Verfügung steht. Die Saatgutdosierleitung 26 ist in einem Winkel zum Dosierorgan 28 angebracht, der bspw. ca. 5° bis 10° betragen kann, wie es etwa die Fig. 2 erkennen lässt. Dies hat den Vorteil, dass die senkrechte Bewegung, welche die Körner 40 nach dem Lösen vom Dosierorgan 28 ausführen können, keinen oder nahezu keinen Einfluss auf die Kornabgabe hat. Der Saatguteinlass 44 kann durch eine derartige Anordnung verschiedenste Ausgestaltungen aufweisen.

Eine Führungsbahn 56 ist darüber hinaus derartig angeordnet, dass Körner 40 oder Schmutzpartikel, welche sich ggf. durch das Unterbrechungselement 46 nicht vom Dosierorgan 28 lösen, ebenso zwangsgeführt in die Saatgutdosierleitung 26 abgegeben werden, wodurch die Verschmutzungsanfälligkeit der Dosiervorrichtung 10 wesentlich reduziert und das Abgabeverhalten insgesamt deutlich verbessert wird. Zusätzlich ist dem vierten bzw. fünften Bereich 4 bzw. 5 auf der den Körnern 40 abgewandten Seite noch eine Ausdrückrolle 62 oder ein vergleichbares Ausdrückelement 62 zugeordnet, welches mittels stiftartiger Dornen überschüssige Körner 40 und/oder Fremdstoffe aus den Aussparungen 34 des Dosierorgans 28 entfernt und diese ggf. vorhandenen Fremdstoffe dadurch ebenfalls in die Saatgutdosierleitung 28 abgegeben werden. Es wird damit vermieden, dass solche Fremdstoffe wieder in den Vorrat 20 zurückbefördert und erneut vom Dosierorgan 28 aufgenommen werden.

Die Dosiervorrichtung 10 weist zudem Mittel in Form wenigstens einer Trennwand 60 auf, welche den ersten Bereichs 1 und Teile des zweiten Bereichs 2 von den dritten, vierten und fünften Bereichen 3, 4 und 5 trennen, wodurch jegliche Stoffe welche den dritten Bereich 3 erreichen, zwangsgeführt durch die Saatgutdosierleitung 26 abgegeben werden. Diese Trennwand 60 ist vorzugsweise luftdurchlässig, bspw. in Form von Bürsten ausgeführt. Die Trennwand 60 ist im Ausführungsbeispiel derartig gestaltet, das diese auch als Führungselement 54 verwendet wird. Die Trennwand 60 weist eine Höhe auf, welche bis unmittelbar an das Dosierorgan 28 reicht. Im Bereich der Korndurchführung bzw. zwischen dem zweiten Bereich 2 und dem dritten Bereich 3 ist die Höhe der Trennwand 60 etwas reduziert, um am Dosierorgan befindliche Körner nicht abzustoßen.

Die Figuren 6a bis 6c zeigen in verschiedenen Ansichten die Anordnung der Saatgutdosierleitung 26 zum Dosierorgan 28. Die Fig. 6a zeigt hierbei eine Draufsicht im Schnitt, bei der die Saatgutdosierleitung 26 eine bogenförmige Kontur 66 aufweist, welche aufgrund der Hinterschneidung durch das Dosierorgan 28 an der dieser zugewandten Seite unterbrochen ist. Die Saatgutdosierleitung 26 ist derartig angeordnet, dass diese im fünften Bereich 5 eine Leitkontur 68 erzeugt, was insbesondere in den Figuren 6b und 6c erkennbar ist. Durch die Hinterschneidung wird es ermöglicht, dass die Kornabgabe möglichst im Zentrum der Saatgutdosierleitung 26 erfolgt, wodurch der Querschnitt zum einen möglichst groß wird und zum anderen Kanten oder dergl. nicht vorhanden sind, wodurch eine nahtlose Übergabe der Körner 40 aus vom Dosierorgan 28 in die Saatgutdosierleitung 26 erfolgen kann. Durch die Leitkontur 68 wird darüber hinaus die Umlenkung der Luftströmung und die Führung der Körner 40 zusätzlich mit verbessert. Das Abstandmaß B wird zwischen der Oberfläche des Dosierorgans 28 und dem Scheitelpunkt der bogenförmigen Kontur 66 gemessen, was wiederum dem maximalen Querschnitt des Saatguteinlass 44 entspricht.

Weiter lässt insbesondere die Figur 6c erkennen, dass die Saatgutdosierleitung 26 am Saatguteinlass 44 einen größeren Querschnitt aufweist als in deren weiteren Verlauf, was wiederum den Vorteil hat, dass der Querschnitt des Saatguteinlass 44 möglichst groß ist. Die Einlassschräge 70 ist zudem gegenüber dem Unterbrechungselement 46 angeordnet wobei diese auch noch abschnittweise die Saatgutdosierleitung 26 ebenfalls mit abschrägt, wodurch die geführte Luftströmung gezielt in Richtung der Saatgutdosierleitung 26 gelenkt werden kann.

Wie es die Fig. 3 erkennen lässt, können die Dimensionierungen der einzelnen Bereiche 1 bis 5 bzw. die von den einzelnen Bereichen 1 bis 5 jeweils eingeschlossenen Winkel verschiedene Werte aufweisen. Bei der gezeigten Ausführungsvariante sind diese Winkel in etwa wie folgt gewählt: so kann der erste Bereich 1 ein Winkelsegment von mindestens 60° bis über 90° überstreichen, der zweite Bereich 2 ein Winkelsegment von mindestens 90° bis etwas mehr als 180°, der dritte Bereich 3 ein Winkelsegment von mindestens 5°, der vierte Bereich 4 von mindestens 5° und der fünfte Bereich 5 von mindestens 20°. Diese Winkelsegmente können je nach Definition von Bereichen und in Abhängigkeit vom Durchmesser der Dosiervorrichtung 10 auch anders gewählt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Bezugszeichenliste

| 1 | erster Bereich |
| 2 | zweiter Bereich |
| 3 | dritter Bereich |
| 4 | vierter Bereich |
| 5 | fünfter Bereich |
| 10 | Dosiervorrichtung |
| 12 | Gehäuse |
| 12' | vordere Gehäusehälfte |
| 12" | hintere Gehäusehälfte |
| 14 | Scharnier |
| 16 | Verschluss |
| 18 | Lufteinlass |
| 20 | Saatgutvorrat |
| 22 | Schieber |
| 24 | Antriebsmotor, Elektromotor |
| 26 | Saatgutdosierleitung |
| 28 | Dosierorgan, scheibenförmiges Dosierorgan |
| 30 | Kammer |
| 32 | Kurvenbahn |
| 34 | Aussparung |
| 36 | senkrechte Luftströmung |
| 38 | geführte Luftströmung |
| 40 | Körner |
| 42 | Kornabgabebereich |
| 44 | Saatguteinlass |
| 46 | Unterbrechungselement |
| 48 | Rückseite |
| 50 | Vorderseite |
| 52 | Vereinzelungsvorrichtung, Vereinzelungselement |
| 54 | Führungselement |
| 56 | Führungsbahn |
| 58 | Lochblech |
| 60 | Trennwand |
| 62 | Ausdrückelement, Ausdrückrolle |
| 64 | Dichtelement, Abdichtelement |
| 66 | Bogenförmige Kontur |
| 68 | Leitkontur |
| 70 | Einlassschräge |

| A | Länge des vierten Bereichs |
| B | Abstand des Dosierorgans zur Rückwand der Saatgutdosierleitung |
| C | Breite und/oder Durchmesser der Saatgutdosierleitung |

## Patentansprüche

1.  Dosiervorrichtung (10) für eine landwirtschaftliche Maschine zur vereinzelten Abgabe von Körnern (40) wie Saatgut, umfassend ein Gehäuse (12) mit Kornzuführung und einem Saatgutvorrat (20) in einer Kammer (30), in welcher Kammer (30) ein Druckniveau (P1) vorherrscht, wobei in der Dosiervorrichtung (10) drehbar ein Dosierorgan (28) angeordnet ist, welches die Kammer (30) begrenzt und in welchem in regelmäßigen Abständen, entlang wenigstens einer Kurvenbahn (32), Aussparungen (34) zur Aufnahme der auszubringenden Körner (40) vorhanden sind, wobei diese Aussparungen (34) die Kammer (30) mit einem Bereich verbinden, in dem ein geringeres Druckniveau (P2) als in der Kammer (30) vorherrscht, wobei durch die somit erzeugte Druckdifferenz Körner (40) von den Aussparungen (34) aufgenommen werden, welche anschließend durch Rotation des Dosierorgans (28) entlang der Kurvenbahn (32) zu einem Kornabgabebereich (42) befördert werden, wobei in diesem Kornabgabebereich (42) eine Saatgutdosierleitung (26) zur Abgabe der Körner (40) in eine mittels Furchenwerkzeugen erzeugte Saatfurche mündet, wobei wiederum im Kornabgabebereich (42) ein Druckniveau vorherrscht und durch dieses Druckniveau wiederum ein Luftstrom entsteht, durch welchen die Körner (40) eine Richtungsänderung in Richtung einer Führungsbahn (56) eines Führungselements (54) und in Richtung einer Saatgutdosierleitung (26) erfahren sowie ebenfalls in der Saatgutdosierleitung (26) ein Luftstrom vorhanden ist, wodurch die Körner in dieser eine aktive Beschleunigung erfahren, **dadurch gekennzeichnet, dass** die Führungsbahn (56) des Führungselements (54) zumindest abschnittsweise die gleiche Längsrichtung bzw. Ausrichtung wie die Saatgutdosierleitung (26) aufweist, wodurch eine geführte Luftströmung (38) erzeugt wird, dass weitgehend alle Körner (40) und/oder Fremdstoffe, welche den Kornabgabebereich (42) erreichen, zwangsgeführt entlang der Führungsbahn (56) des Führungselementes (54) in die Saatgutdosierleitung (26) abgegeben werden.

2.  Dosiervorrichtung (10) nach Anspruch 1, die sich aus mehreren Bereichen zusammensetzt, wobei diese zumindest beinhalten:

    - einen ersten Bereich (1), in welchem mittels einer Druckdifferenz von den Aussparungen (34) eine Aufnahme der Körner (40) aus einem Saatgutvorrat (20) erfolgt,

- einen sich an den ersten Bereich (1) anschließenden zweiten Bereich (2), in welchem ein Transport der Körner (40) mittels des Dosierorgans (28) zum Kornabgabebereich (42) erfolgt, wobei diesem Bereich eine Vereinzelungsvorrichtung und/oder Vereinzelungselemente (52) zugeordnet sind,

- einen sich an den zweiten Bereich (2) anschließenden dritten Bereich (3), welchem wenigstens ein Unterbrechungselement (46) zur Unterbrechung der Druckdifferenz an den Aussparungen (34) zugeordnet ist,

- einen sich an den dritten Bereich (3) anschließenden vierten Bereich (4), in dem die Körner (40) und/oder die Luftströmung eine Richtungsänderung aus einer Kreisbewegung entlang der Kurvenbahn (32) und einer senkrechten Luftströmung (36) in eine geführte Transportrichtung und eine geführte Luftströmung (38) in Richtung der Saatgutdosierleitung (26) gelenkt werden, und

- einen sich an den vierten Bereich (4) anschließenden fünften Bereich (5), welchem ein Saatguteinlass (44) der Saatgutdosierleitung (26) und ein Abschnitt der Saatgutdosierleitung (26) zum Transport der Körner (40) zu einer Saatfurche zugeordnet ist.

3. Dosiervorrichtung nach Anspruch 1 oder 2, bei welcher der Kornabgabebereich (42) eine Luftverbindung zur Kammer (30) und/oder zu einer Leitung der Luftversorgung der Kammer (30) und/oder zu einem Druckerzeugungsglied aufweist und/oder die Saatgutdosierleitung (26) in die Kammer (30) hinein ragt.

4. Dosiervorrichtung nach einem der Ansprüche 2 oder 3, bei der die Saatgutdosierleitung (26) im fünften Bereich (5) zumindest abschnittsweise tangential zu wenigstens einer Kurvenbahn (32) angeordnet ist.

5. Dosiervorrichtung nach einem der Ansprüche 2 bis 4, bei welcher der Saatguteinlass (44) und zumindest abschnittweise die Saatgutdosierleitung (26) das Dosierorgan (28) hinterschneidet.

6. Dosiervorrichtung nach einem der Ansprüche 2 bis 5, bei der die Körner (40) im vierten Bereich (4) von einer geführten Luftströmung (38) und einem Führungselement (54) getragen und/oder geführt werden.

7. Dosiervorrichtung nach Anspruch 6, bei der die Körner (40) im fünften Bereich (5) von einer geführten Luftströmung (38) und einem Führungselement (54) und der Saatgutdosierleitung (26) getragen und/oder geführt werden.

8. Dosiervorrichtung nach einem der Ansprüche 1 bis 7, bei der das Führungselement (54) eine Führungsbahn (56) aufweist, welche zumindest abschnittweise parallel zur Saatgutdosierleitung (26) angeordnet ist, und mittels dieser eine Richtungsänderung der Körner aus einer Kreisförmigen entlang einer Kurvenbahn (32) in eine weitestgehend lineare und/oder geführte Richtung entlang der Saatgutdosierleitung (26) hervorgerufen wird.

9. Dosiervorrichtung nach einem der Ansprüche 1 bis 8, bei der die Saatgutdosierleitung (26) eine Leitkontur (68) aufweist, mittels derer eine Richtungsänderung der Körner (40) aus einer Kreisförmigen entlang einer Kurvenbahn (32) in eine weitestgehend lineare und/oder geführte entlang der Saatgutdosierleitung (26) hervorgerufen wird.

10. Dosiervorrichtung nach einem der Ansprüche 2 bis 9, bei der die Saatgutdosierleitung (26) im Bereich des Saatguteinlass (44) einen vergrößerten Querschnitt aufweist.

11. Dosiervorrichtung nach einem der Ansprüche 2 bis 10, bei der dem zweiten Bereich (2) eine Vereinzelungsvorrichtung und/oder Vereinzelungselemente (52) zugeordnet sind, welche entlang der Kurvenbahn (32) versetzt werden können.

12. Dosiervorrichtung nach einem der Ansprüche 2 bis 11, der wenigstens eine Trennwand (60) zugeordnet ist, welche den ersten und Teile des zweiten Bereichs (1, 2) vom dritten, vierten und fünften Bereich (3, 4, 5) unterteilen.

13. Dosiervorrichtung nach einem der Ansprüche 2 bis 12, bei welcher der Kornabgabebereich (42) den dritten, vierten und fünften Bereich (3, 4, 5) umfasst.

14. Dosiervorrichtung nach einem der Ansprüche 2 bis 13, bei der dem vierten und/oder fünften Bereich (4; 5) auf der den Körnern (40) abgewandten Seite eine Ausdrückrolle und/oder ein Ausdrückelement (62) zugeordnet ist/sind.

15. Dosiervorrichtung nach einem der Ansprüche 2 bis 14, bei der das Unterbrechungselement (46) als flexible Rolle oder als Dichtelement oder als Scheibe ausgebildet ist, welche wenigstens die Größe einer Aussparung (34) aufweist.

16. Dosiervorrichtung nach Anspruch 12, bei der die Trennwand (60) aus einem zumindest abschnittsweise bürstenartigen und/oder luftdurchlässigen Element gebildet ist.

**Claims**

1. A metering device (10) for an agricultural machine for single-grain discharge of grains (40), such as seeds, comprising a housing (12) with a grain feed and a seed storage (20) in a chamber (30), in which chamber (30) a pressure level (P1) prevails; wherein a metering organ (28) is rotatably disposed in the metering device (10), with the metering organ (28) delimiting the chamber (30), and with recesses (34) for receiving the grains (40) to be spread being present, along at least one cam track (32), at regular intervals in said metering organ (28); wherein said recesses (34) connect the chamber (30) to an area where a lower pressure level (P2) than in the chamber (30) prevails; wherein grains (40) are received in the recesses (34) by way of the pressure difference thus generated, with said grains (40) being subsequently conveyed along the cam track (32) to a grain discharge area (42) by rotation of the metering organ (28); wherein a seed metering tube (26) for the discharge of grains (40) into a seed furrow produced by means of furrowing tools ends in said grain discharge area (42); wherein a pressure level in turn prevails in the grain discharge area (42), and an airstream is in turn generated by said pressure level, with the grains (40) undergoing a change of direction toward a guideway (56) of a guide element (54) and toward a seed metering tube (26) by way of said airstream; as well as with an airstream being likewise present in the seed metering tube (26), whereby the grains undergo an active acceleration in said seed metering tube (26), **characterised in that** the guideway (56) of the guide element (54) at least in sections has the same longitudinal direction and accordingly the same orientation as the seed metering tube (26), whereby a guided airflow (38) is generated such that largely all grains (40) and/or foreign materials reaching the grain discharge area (42) are discharged in a positively guided manner along the guideway (56) of the guide element (54) into the seed metering tube (26).

2. The metering device (10) as recited in claim 1, being composed of a plurality of areas, wherein said areas at least include:

   - a first area (1), where receiving the grains (40) from a seed storage (20) is carried out by the recesses (34) by means of a pressure difference;
   - a second area (2) subsequent to the first area (1), with a transport of the grains (40) to the grain discharge area (42) being carried out in said second area (2) by means of the metering organ (28), wherein a separating device and/or separating elements (52) are associated with said area;

   - a third area (3) subsequent to the second area (2), with at least one interruption element (46) for the interruption of the pressure difference at the recesses (34) being associated with said third area (3);
   - a fourth area (4) subsequent to the third area (3), with the grains (40) and/or the airflow undergoing a change of direction from a circular movement along the cam track (32) and along a perpendicular airflow (36) and being directed in said fourth area (4) into a guided transport direction and a guided airflow (38) toward the seed metering tube (26); and
   - a fifth area (5) subsequent to the fourth area (4), with a seed inlet (44) of the seed metering tube (26) and a section of the seed metering tube (26) being associated with said fifth area (5) for the transport of the grains (40) to a seed furrow.

3. The metering device as recited in claim 1 or 2, with the grain discharge area (42) having an air connection to the chamber (30) and/or to an air supply duct of the chamber (30) and/or to a pressure generating member, and/or with the seed metering tube (26) extending into the chamber (30).

4. The metering device as recited in one of the claims 2 or 3, with the seed metering tube (26) being disposed at least in sections tangentially to at least one cam track (32) in the fifth area (5).

5. The metering device as recited in one of the claims 2 to 4, with the seed inlet (44) and, at least in sections, the seed metering tube (26) undercutting the metering organ (28).

6. The metering device as recited in one of the claims 2 to 5, with the grains (40) being carried and/or guided in the fourth area (4) by a guided airflow (38) and by a guide element (54).

7. The metering device as recited in claim 6, with the grains (40) being carried and/or guided in the fifth area (5) by a guided airflow (38) and by a guide element (54) and by the seed metering tube (26).

8. The metering device as recited in one of the claims 1 to 7, with the guide element (54) having a guideway (56) that is at least in sections disposed parallel to the seed metering tube (26), and with a change of direction of the grains from a circular direction along a cam track (32) into a direction that is to the greatest possible extent linear and/or guided along the seed metering tube (26) being induced by means of said guideway (56).

9. The metering device as recited in one of the claims 1 to 8, with the seed metering tube (26) having a guiding contour (68), with a change of direction of the grains (40) from a circular direction along a cam track (32) into a direction that is to the greatest possible extent linear and/or guided along the seed metering tube (26) being induced by means of said guiding contour (68).

10. The metering device as recited in one of the claims 2 to 9, with the seed metering tube (26) having an enlarged cross section in the area of the seed inlet (44).

11. The metering device as recited in one of the claims 2 to 10 with a separating device and/or separating elements (52) that can be relocated along the cam track (32) being associated with the second area (2).

12. The metering device as recited in one of the claims 2 to 11, with at least one partition wall (60) being associated with the metering device, with the partition wall (60) dividing the first area and parts of the second area (1, 2) from the third, fourth, and fifth areas (3, 4, 5).

13. The metering device as recited in one of the claims 2 to 12, with the grain discharge area (42) comprising the third, fourth, and fifth areas (3, 4, 5).

14. The metering device as recited in one of the claims 2 to 13, with a squeezing roll and/or a squeezing element (62) being associated with the fourth and/or the fifth area (4, 5) on the side that is averted from the grains (40).

15. The metering device as recited in one of the claims 2 to 14, with the interruption element (46) being designed as a flexible roll or as a sealing element or as a disk that has at least the size of a recess (34).

16. The metering device as recited in claim 12, with the partition wall (60) being formed as an element that is at least in sections brush-like and/or air-permeable.

**Revendications**

1. Dispositif de dosage (10) pour une machine agricole, destiné à distribuer de façon individualisée des graines (40), telles que semences, comprenant un boîtier (12) ayant une alimentation de graines et un réservoir de semences (20) dans une chambre (30), dans laquelle chambre (30) règne un niveau de pression (P1), dans ledit dispositif de dosage (10) étant disposé à rotation un organe de dosage (28) qui limite la chambre (30) et dans lequel des évidements (34) destinés à recevoir les graines (40) à épandre sont disposés à intervalles réguliers le long d'au moins un chemin incurvé (32), ces évidements (40) mettent en communication la chambre (30) avec une zone où règne un niveau de pression (P2) inférieur à celui de la chambre (30), dans lequel, grâce à la différence de pression ainsi créée, des graines (40) sont reçues par les évidements (40), qui, ensuite, sont transportées par rotation de l'organe de dosage (28) le long du chemin incurvé (32) vers une zone de distribution de graines (42), dans lequel, dans cette zone de distribution de graines (42), une conduite de dosage de semences (26) pour la distribution des graines (40) débouche dans un sillon à graines produit au moyen d'outils à sillonner, dans ladite zone de distribution de graines (42), quant à elle, régnant un niveau de pression et ce niveau de pression provoquant à son tour la création d'un courant d'air par lequel les graines (40) subissent un changement de direction en direction d'un chemin de guidage (56) d'un élément de guidage (54) et en direction d'une conduite de dosage de semences (26), et un courant d'air étant présent également dans ladite conduite de dosage de semences (26) ce par quoi les graines subissent une accélération active dans celle-ci, **caractérisé par le fait que** le chemin de guidage (56) de l'élément de guidage (54) présente au moins par sections la même direction longitudinale ou bien orientation que ladite conduite de dosage de semences (26), un écoulement d'air (38) guidé étant ainsi créé, que dans une large mesure toutes les graines (40) et/ou substances étrangères qui atteignent la zone de distribution de graines (42) sont distribuées, à guidage forcé le long du chemin de guidage (56) de l'élément de guidage (54), dans la conduite de dosage de semences (26).

2. Dispositif de dosage (10) selon la revendication 1, qui se compose de plusieurs zones, celles-ci comprenant au moins:

   - une première zone (1) dans laquelle, grâce à une différence de pression, les évidements (34) reçoivent des graines (40) en provenance d'un réservoir de semences (20),
   - une deuxième zone (2) qui est contiguë à la première zone (1) et dans laquelle les graines (40) sont transportées au moyen dudit organe de dosage (28) vers la zone de distribution de graines (42), à cette zone étant associé(s) un dispositif d'individualisation et/ou des éléments d'individualisation (52),
   - une troisième zone (3) qui est contiguë à la deuxième zone (2) et à laquelle est associé au moins un élément d'interruption (46) destiné à interrompre la différence de pression sur les évidements (34),
   - une quatrième zone (4) qui est contiguë à la troisième zone (3) et dans laquelle les graines (40) et/ou l'écoulement d'air subissent un changement de direction à partir d'un mouvement circulaire le long du chemin incurvé (32) et d'un écoulement d'air vertical (36) dans une direction de transport guidée et un écoulement d'air guidé (38) en direction de la conduite de dosage de semences (26), et

- une cinquième zone (5) qui est contiguë à la quatrième zone (4) et à laquelle sont associées une entrée de semences (44) de la conduite de dosage de semences (26) et une section de la conduite de dosage de semences (26) pour le transport des graines (40) vers un sillon à graines.

**3.** Dispositif de dosage selon la revendication 1 ou 2, dans lequel la zone de distribution de graines (42) présente une communication d'air avec la chambre (30) et/ou avec une conduite de l'alimentation en air de la chambre (30) et/ou avec un élément de génération de pression, et/ou la conduite de dosage de semences (26) fait saillie dans la chambre (30).

**4.** Dispositif de dosage selon l'une quelconque des revendications 2 ou 3, dans lequel, dans la cinquième zone (5), la conduite de dosage de semences (26) est disposée, au moins par sections, tangentiellement à au moins un chemin incurvé (32).

**5.** Dispositif de dosage selon l'une quelconque des revendications 2 à 4, dans lequel ladite entrée de semences (44), et au moins par sections la conduite de dosage de semences (26), contre-dépouille ledit organe de dosage (28).

**6.** Dispositif de dosage selon l'une quelconque des revendications 2 à 5, dans lequel, dans la quatrième zone (4), les graines (40) sont supportées et/ou guidées par un écoulement d'air guidé (38) et par un élément de guidage (54).

**7.** Dispositif de dosage selon la revendication 6, dans lequel, dans la cinquième zone (5), les graines (40) sont supportées et/ou guidées par un écoulement d'air guidé (38) et par un élément de guidage (54) et par la conduite de dosage de semences (26).

**8.** Dispositif de dosage selon l'une quelconque des revendications 1 à 7, dans lequel l'élément de guidage (54) présente un chemin de guidage (56) qui est disposé, au moins par sections, parallèlement à la conduite de dosage de semences (26), et au moyen de celui-ci est provoqué un changement de direction des graines à partir d'une direction circulaire le long d'un chemin incurvé (32) dans une direction dans une large mesure linéaire et/ou guidée le long de la conduite de dosage de semences (26).

**9.** Dispositif de dosage selon l'une quelconque des revendications 1 à 8, dans lequel la conduite de dosage de semences (26) présente un contour de guidage (68) au moyen duquel est provoqué un changement de direction des graines (40) à partir d'une direction circulaire le long d'un chemin incurvé (32) dans une direction dans une large mesure linéaire et/ou guidée le long de la conduite de dosage de semences (26).

**10.** Dispositif de dosage selon l'une quelconque des revendications 2 à 9, dans lequel la conduite de dosage de semences (26) présente une section transversale agrandie au niveau de l'entrée de semences (44).

**11.** Dispositif de dosage selon l'une quelconque des revendications 2 à 10, dans lequel un dispositif d'individualisation et/ou des éléments d'individualisation (52) sont associés à la deuxième zone (2), qui peuvent être décalés le long du chemin incurvé (32).

**12.** Dispositif de dosage selon l'une quelconque des revendications 2 à 11, auquel est associée au moins une cloison (60) qui sépare la première zone et des parties de la deuxième (1,2) desdites troisième, quatrième et cinquième zones (3, 4, 5).

**13.** Dispositif de dosage selon l'une quelconque des revendications 2 à 12, dans lequel la zone de distribution de graines (42) comprend les troisième, quatrième et cinquième zones (3, 4, 5).

**14.** Dispositif de dosage selon l'une quelconque des revendications 2 à 13, dans lequel un rouleau d'éjection et/ou un élément d'éjection (62) est/sont associé(s) à la quatrième et/ou à la cinquième zone (4, 5) du côté opposé aux graines (40).

**15.** Dispositif de dosage selon l'une quelconque des revendications 2 à 14, dans lequel ledit élément d'interruption (46) est réalisé en tant que rouleau flexible ou comme élément d'étanchéité ou en tant que disque qui présente au moins la taille d'un évidement (34).

**16.** Dispositif de dosage selon la revendication 12, dans lequel ladite cloison (60) est réalisée dans un élément qui est, au moins par sections, de type brosse et/ou est perméable à l'air.

Fig. 1

EP 3 050 419 B1

Fig. 2

Fig. 3

Fig. 4

EP 3 050 419 B1

18

Fig. 5

EP 3 050 419 B1

Fig. 6a

Fig. 6b

Fig. 6c

**IN DER BESCHREIBUNG AUFGEFÜHRTE DOKUMENTE**

**In der Beschreibung aufgeführte Patentdokumente**

- EP 2168417 A1
- US 20140182495 A1
- WO 2010059101 A1
- EP 1928223 B1